# EUROPEAN PATENT APPLICATION

(11) **EP 4 512 276 A1**
(43) Date of publication of application: **26.02.2025**
(21) Application number: 23192836.7
(22) Date of filing: 23.08.2023
(51) Int. Cl.: A45D 27/46, A46B 17/06, A61C 17/22

(54) **METHOD FOR DETERMINING A QUANTITATIVE CONDITION OF A CLEANING LIQUID IN A CLEANING DEVICE FOR A PERSONAL CARE DEVICE**

(71) Applicant: Koninklijke Philips N.V., 5656 AG Eindhoven (NL)
(72) Inventor: PIJPER, Thomas, Eindhoven (NL)
(74) Representative: Philips Intellectual Property & Standards

(57) **Abstract**

The invention provides a computer-implemented method (201, 301) for determining a quantitative condition (QC₁, QC₂) of a cleaning liquid (19, 119) in a cleaning device (1, 101) for a personal care device, e.g., an electric shaver (3, 103). The method involves controlling (203, 207; 303) a motor (23, 129), configured to drive a liquid-displacing member (21, 121) of the cleaning device, to successively run at least at two different motor speeds (MS₁, MS₂) and, for each of the at least two different motor speeds, receiving (205, 209; 303) from a sensor (65, 165) a sensor output (S_{IM1}, S_{IM2}) relating to an electric current (I_{M1}, I_{M2}) in the motor (23, 129). The method further involves determining (213, 307), based on the electric currents in the motor for the at least two different motor speeds, a value of a parameter (P_{dI/dMS}) associated with an extent to which the electric current in the motor changes in dependence on the motor speed, and determining (215, 309) the quantitative condition of the cleaning liquid based on the determined value of said parameter and based on a predetermined relation between the quantitative condition and said parameter.

## Description

### FIELD OF THE INVENTION

The invention relates to a computer-implemented method for determining a quantitative condition of a cleaning liquid in a cleaning device for a personal care device, said quantitative condition relating to a quantity of the cleaning liquid which is present in the cleaning device, the method comprising: receiving from a sensor a sensor output relating to an electric current in a motor configured to drive a liquid-displacing member of the cleaning device; determining the electric current in the motor from the received sensor output; and determining the quantitative condition based on the determined electric current in the motor and based on a predetermined relation between the quantitative condition and the electric current in the motor.

The invention further relates to a cleaning device for a personal care device, comprising: a housing; a receiving chamber configured to receive at least a portion of the personal care device to be cleaned in a cleaning position within the receiving chamber; a reservoir configured to hold a cleaning liquid; a liquid-displacing member configured to displace the cleaning liquid from the reservoir to the receiving chamber for cleaning said portion of the personal care device; a motor configured to drive the liquid-displacing member; a sensor configured to measure an electric current in the motor and provide a sensor output relating to the measured electric current in the motor; and a processor configured to control the motor, receive the sensor output from the sensor and determine, based on the sensor output, a quantitative condition of the cleaning liquid in the cleaning device, said quantitative condition relating to a quantity of the cleaning liquid which is present in the cleaning device.

The invention further relates to a personal care system comprising a personal care device and a cleaning device for the personal care device, wherein the cleaning device comprises: a housing; a receiving chamber configured to receive at least a portion of the personal care device to be cleaned in a cleaning position within the receiving chamber; a reservoir configured to hold a cleaning liquid; a liquid-displacing member configured to displace the cleaning liquid from the reservoir to the receiving chamber for cleaning said portion of the personal care device; and a driven coupling member connected with the liquid-displacing member; wherein the personal care device comprises: a motor; a sensor configured to measure an electric current in the motor and provide a sensor output relating to the measured electric current in the motor; a driving coupling member connected to the motor; and a processor configured to control the motor and receive the sensor output from the sensor; and wherein the driven coupling member of the cleaning device and the driving coupling member of the personal care device are configured and arranged to be mutually coupled in the cleaning position of said portion of the personal care device such that the liquid-displacing member of the cleaning device is drivable by the motor of the personal care device.

### BACKGROUND OF THE INVENTION

Personal care devices configured to provide a personal care treatment to a body part of a subject are widely known. Examples are electric shavers intended to shave beard hairs on the face of a human, hair-trimming devices intended to cut beard hairs on the face of a human or hairs on human body parts other than the face, intense pulsed light (IPL) devices intended to remove hairs on the legs or other body parts of a human, facial-cleansing brushing devices intended to clean the face of a human by means of a rotating and/or vibrating brush, skin rejuvenation devices intended to rejuvenate the skin of body parts of a human by means of electromagnetic or radiofrequency energy, and toothbrushes intended to clean the teeth of a human.

A personal care device may be used with a cleaning device configured to clean at least a portion of the personal care device. In particular, it may be desirable to clean a personal care treatment unit of the personal care device which provides the actual personal care treatment to the body part of the subject. When the personal care device is, e.g., an electric shaver, the cleaning device may be configured to clean a shaving unit of the electric shaver which comprises the hair-cutting unit or hair-cutting units. In such a cleaning device, a cleaning liquid is displaced by means of a liquid-displacing member, e.g., a pump, from a reservoir to a receiving chamber wherein the portion of the personal care device to be cleaned is placed. This will generate a flow of the cleaning liquid along and/or through said portion of the personal care device, so that said portion is cleaned. The cleaning device itself may have a motor to drive the liquid-displacing member and a processor to control the speed of the motor according to a predefined cleaning program. In other systems, such as disclosed by EP 3 737 257 B1 in the name of the applicant, the liquid-displacing member is driven by a motor of the personal care device, in this example an electric shaver, when the electric shaver is placed in the cleaning device. In this example, the shaver motor is controlled by a processor of the electric shaver and the processor may control the speed of the motor according to a predefined cleaning program when the electric shaver is placed in the cleaning device.

When using such a cleaning device, it is useful for the user to be informed about the quantity of the cleaning liquid which is present in the cleaning device. When the quantity of the cleaning liquid is insufficient, the liquid-displacing member may not be able to displace a sufficient amount of cleaning liquid or any cleaning liquid at all towards the receiving chamber, so that insufficient cleaning or no cleaning at all of the personal care device is achieved. It is for example known to provide the housing of the cleaning device with a transparent viewing window via which the user may directly observe the level of the cleaning liquid in the reservoir of the cleaning device. When the user observes that the level of the cleaning liquid is too low, he may fill the reservoir with fresh cleaning liquid or replace the reservoir by a full reservoir. A disadvantage of such a viewing window is that the cleaning liquid may be poorly visible via the viewing window, in particular when ambient lighting conditions are poor. In other known examples the level of the cleaning liquid is detected automatically by means of a fluid-level sensor in the reservoir, and the user is informed automatically about a too low level of the cleaning liquid via, e.g., a display on the cleaning device or via an audible feedback signal. Such sensor-based automatic detection systems are however complex and expensive.

EP 3 051 975 B1 in the name of the applicant discloses a cleaning device for an electric shaver which comprises a sensor for sensing the electric current in the motor driving the liquid-displacing member and a processor configured to detect an insufficient level of the cleaning liquid in the reservoir based on the electric current in the motor sensed by the sensor. In this known cleaning device, the processor compares the value of the sensed electric current with a nominal value which corresponds to the electric current in the motor occurring when the level of the cleaning liquid is sufficient. When the level of the cleaning liquid is sufficient, the liquid-displacing member generates a nominal uninterrupted flow of the cleaning liquid. When the level of the cleaning liquid is insufficient, the flow of the cleaning liquid generated by the liquid-displacing member is disrupted. The processor detects such a disruption of the flow of the cleaning liquid when the sensed electric current deviates more than a predefined threshold value from the nominal value for the sensed electric current. When the processor detects such a disruption, the processor controls an indicator of the cleaning device to indicate a warning to the user that the level of the cleaning liquid is insufficient. A disadvantage of this known cleaning device is that the electric current in the motor occurring when the level of the cleaning liquid is sufficient may be different between cleaning devices, i.e., even when the cleaning devices have identical designs and structures. Furthermore, for a specific sample of the cleaning device the electric current in the motor occurring when the level of the cleaning liquid is sufficient may vary during the lifetime of the cleaning device, e.g., as a result of wear or contamination. As a result, when determining the level of the cleaning liquid by comparing the absolute value of the electric current in the motor with the nominal value, the result may be inaccurate.

### SUMMARY OF THE INVENTION

It is an object of the present invention to provide a computer-implemented method, a cleaning device and a personal care system, each having the features as mentioned in the section "field of the invention" here before, by means of which the problems associated with the known cleaning devices as described here before in the section "background of the invention" may at least be alleviated. In particular, an object of the present invention is to provide a computer-implemented method, a cleaning device and a personal care system by means of which the quantitative condition of the cleaning liquid in the cleaning device can be determined based on the measured electric current in the motor driving the liquid-displacing member in a more reliable manner as compared to the cleaning device disclosed by EP 3 051 975 B 1 and without the use of any sensor output generated or used in previous determinations of the quantitative condition of the cleaning liquid.

According to a first aspect of the invention, to achieve the above-mentioned object a computer-implemented method having the features as mentioned in the section "field of the invention" here before is characterized in that the method further comprises: controlling the motor to successively run at least at two different motor speeds; receiving, for each of the at least two different motor speeds, the sensor output; determining, for each of the at least two different motor speeds, the electric current in the motor from the respective received sensor output; determining, based on the electric currents in the motor determined for the at least two different motor speeds, a value of a parameter associated with an extent to which the electric current in the motor changes in dependence on the motor speed; and determining the quantitative condition of the cleaning liquid based on the determined value of the parameter and based on a predetermined relation between the quantitative condition and the parameter.

The term "quantitative condition of the cleaning liquid" as used herein is intended to refer to a condition or state that characterizes the quantity of the cleaning liquid which is present in the cleaning device. Besides an absolute value of the quantity of the cleaning liquid, examples of a "quantitative condition" include, but are not limited to, a sufficient quantity, a sufficient level, an insufficient quantity, an insufficient level, a full reservoir, or an empty reservoir.

According to the method of the invention, the electric current in the motor that drives the liquid-displacing member of the cleaning device is measured at least at two different motor speeds of the motor. Based on these measurements, a value of a parameter associated with an extent to which the electric current in the motor changes in dependence on the motor speed is determined. The expression "extent to which the electric current in the motor changes in dependence on the motor speed" as used herein is intended to refer to an (average) change of the electric current in the motor associated with a predefined change of the motor speed, in other words an extent to which the electric current changes relative to a change of the motor speed. If the electric current could be expressed as a mathematical function of the motor speed, the "extent to which the electric current in the motor changes in dependence on the motor speed" could be the mathematical derivative function of said mathematical function. Examples of the parameter associated with the extent to which the electric current changes in dependence on the motor speed will be described in the following with reference to preferred embodiments of the invention.

Surprisingly, the inventors of the present invention found that, when the quantity of the cleaning liquid in the cleaning device is sufficient for the liquid-displacing member to generate a continuous uninterrupted flow of the cleaning liquid from the reservoir to the receiving chamber, the electric current in the motor significantly increases with increasing motor speed while, when the quantity of the cleaning liquid is insufficient for the liquid-displacing member to generate a flow of the cleaning liquid from the reservoir to the receiving chamber, the increase of the electric current in the motor with increasing motor speed is much less pronounced. The significant increase of the electric current with increasing motor speed in case of a sufficient quantity of the cleaning liquid was found to occur within a substantial subrange of the range of the motor speed used for a cleaning program of a conventional cleaning device. As a result, it was found to be possible to distinguish between at least two different quantitative conditions of the cleaning liquid based on the value of said parameter which is associated with the extent to which the electric current in the motor changes in dependence on the motor speed. In particular, it was found to be possible to distinguish, based on said parameter, between at least a first quantitative condition which enables the generation of an uninterrupted flow of the cleaning liquid by the liquid-displacing member and a second quantitative condition which does not enable the generation of a flow of the cleaning liquid by the liquid-displacing member. In particular, it appeared to be possible to predetermine a relation between the quantitative condition and said parameter, so that in a practical situation the quantitative condition of the cleaning liquid can be determined based on the determined value of said parameter and based on said predetermined relation. Examples of said predetermined relation will be described in the following with reference to preferred embodiments of the invention. The determination of the quantitative condition by means of the method according to the invention appeared to be robust and accurate during the lifetime of a cleaning device, and to provide uniform results for a plurality of different samples of a cleaning device of a particular design and structure. Because the determination of the quantitative condition by means of the method according to the invention is only based on actual measurements of the electric current in the motor, the method does not need to rely on measurements of the electric current done during, e.g., previous cleaning sessions and stored in a memory of the processor.

In an embodiment of the computer-implemented method according to the invention, the method further comprises providing a feedback signal relating to the determined quantitative condition of the cleaning liquid to a feedback member to inform the user of the cleaning device about the determined quantitative condition. The feedback member may be, e.g., a display of the cleaning device, the personal care device or a different device, such as a smart phone which is in data communication with the cleaning device and/or the personal care device.

In a preferred embodiment of the computer-implemented method according to the invention, the method comprises: determining that the cleaning liquid has a first quantitative condition when the determined value of the parameter is above a predetermined threshold value; and determining that the cleaning liquid has a second quantitative condition different from the first quantitative condition when the determined value of the parameter is below the predetermined threshold value. In this preferred embodiment said predetermined relation between the quantitative condition and the parameter is relatively simple, i.e., for any value of the parameter above said predetermined threshold value the quantitative condition of the cleaning liquid is said first quantitative condition, and for any value of the parameter below said predetermined threshold value the quantitative condition of the cleaning liquid is said second quantitative conditions. In particular this preferred embodiment appeared to be suitable in circumstances wherein the first and second quantitative conditions each imply a different range of quantities of the cleaning liquid, e.g., "a sufficient quantity" and "an insufficient quantity", "a quantity above a predefined threshold" and "a quantity below a predefined threshold".

In a preferred embodiment of the computer-implemented method according to the invention, the method comprises: controlling the motor to successively run at a first motor speed and at a second motor speed different from the first motor speed; receiving the sensor output for the first motor speed and for the second motor speed; and determining the electric current in the motor for the first motor speed and for the second motor speed from the respective received sensor output; wherein the parameter is a difference between the electric currents in the motor determined for the first motor speed and for the second motor speed. The inventors of the present invention found that, within the range of the motor speed for which the increase of the electric current with increasing motor speed is significant in case of a sufficient quantity of the cleaning liquid, said increase of the electric current is nearly linear with the increase of the motor speed. Therefore, by measuring the electric current only at two different motor speeds within this range, the extent to which the electric current in the motor changes in dependence on the motor speed can be rather accurately represented by a relatively simple parameter, i.e., the difference between the electric currents in the motor determined for the two different motor speeds. In this embodiment, when the determined difference is above a predefined threshold value it is determined that the cleaning liquid has the first quantitative condition, and when the determined difference is below the predetermined threshold value it is determined that the cleaning liquid has the second quantitative condition.

In a further preferred embodiment of the computer-implemented method according to the invention, the method comprises: controlling the motor to successively run at a plurality of different motor speeds within a range of motor speeds; receiving the sensor output for each motor speed of said plurality of different motor speeds; and determining the electric current in the motor for each motor speed of said plurality of different motor speeds from the respective received sensor output; wherein the parameter is a slope of a linear regression relationship between said plurality of different motor speeds and the electric currents in the motor determined for each motor speed of said plurality of different motor speeds. By measuring the electric current at a plurality of different motor speeds, preferably three or more different motor speeds, the extent to which the electric current in the motor changes in dependence on the motor speed can be very accurately represented by the value of the slope of the linear regression relationship between said plurality of different motor speeds and the electric currents determined for the plurality of different motor speeds. In this embodiment, when the determined value of said slope is above a predefined threshold value it is determined that the cleaning liquid has the first quantitative condition, and when the determined value of said slope is below the predetermined threshold value it is determined that the cleaning liquid has the second quantitative condition.

In a further embodiment of the computer-implemented method according to the invention, the method further comprises: determining a coefficient of determination, R², associated with the linear regression relationship; and determining that the cleaning liquid has a third quantitative condition different from the first and second quantitative conditions when the determined coefficient of determination is below a predefined threshold value. In embodiments wherein the electric current in the motor is measured for a plurality of different motor speeds, said coefficient of determination is a measure for the degree of variation within the measured relationship between the electric current and the motor speed. A relatively large degree of variation, i.e., a relatively small value of the determined coefficient of determination, may indicate that the flow of the cleaning liquid is instable, e.g., alternately stable and interrupted. This may indicate a transition state of the quantity of the cleaning liquid from relatively large, i.e., sufficient for a stable flow of the cleaning liquid, to relatively small, i.e., insufficient for any flow of cleaning liquid. Thus, when said determined coefficient of determination is below a predefined threshold value, it may be determined that the cleaning liquid has a third quantitative condition different from the first and second quantitative conditions.

In a still further embodiment of the computer-implemented method according to the invention, the method comprises controlling the motor to change the motor speed from a first end value of the range of motor speeds to a second end value of the range of motor speeds gradually or linearly over a predefined time period. By changing the motor speed gradually or linearly over a predefined time period from the first end value to the second end value, a user may experience the change of the motor speed, required for the measurement of the electric current in the motor at the plurality of different motor speeds, as not disturbing or annoying. During said gradual change of the motor speed, the electric current in the motor may be measured and registered by the processor when the motor speed reaches each respective value of the plurality of motor speeds for which a measurement is required.

According to a second aspect of the invention, a computer program product is provided comprising a non-transitory computer-readable medium, the computer-readable medium having computer-readable code embodied therein, the computer readable code being configured such that, on execution by a suitable computer or processor, the computer or processor is caused to perform the method according to the invention or any embodiment of the method as described here before.
According to a third aspect of the invention, to achieve the above-mentioned object a cleaning device, having the features as mentioned in the section "field of the invention" here before, is characterized in that the processor of the cleaning device is configured to perform the method according to the invention or any embodiment thereof as described here before to determine the quantitative condition of the cleaning liquid in the cleaning device.

According to a fourth aspect of the invention, to achieve the above-mentioned object a personal care system, having the features as mentioned in the section "field of the invention" here before, is characterized in that the processor of the personal care device of the personal care system is configured to perform the method according to the invention or any embodiment thereof as described here before to determine a quantitative condition of the cleaning liquid in the cleaning device, said quantitative condition relating to a quantity of the cleaning liquid which is present in the cleaning device.

In a personal care system according to the invention, the driven coupling member of the cleaning device and the driving coupling member of the personal care device are mutually coupled in the cleaning position of personal care device within the receiving chamber of the cleaning device, so that the liquid-displacing member of the cleaning device is drivable by the motor of the personal care device via said driving coupling member and said driven coupling member. As a result, the processor and the motor of the personal care device may control and drive the liquid-displacing member of the cleaning device to perform a predefined cleaning program to clean the personal care device. Thus, the cleaning device does not need any electric or electric components and can be of a relatively simple design with only mechanical components. Because, usually, the personal care device already has a sensor to measure the electric current in the motor of the personal care device, said sensor may be used by the processor of the personal care device to perform the method according to the invention to determine the quantitative condition of the cleaning liquid in the cleaning device. Thus, in the personal care system according to the invention the processor of the personal care device may be configured to perform the method according to the invention without the use of any additional dedicated sensor.

In embodiments of the cleaning device and the personal care system according to the invention, the processor is configured to: control the motor speed of the motor as a function of time according to a predefined cleaning program; and, after controlling the motor according to the predefined cleaning program, control the motor to successively run at least at said two different motor speeds in order to determine the quantitative condition of the cleaning liquid. In these embodiments the quantitative condition of the cleaning liquid in the cleaning device is determined after completion of the predefined cleaning program, so that the portion of the personal care device to be cleaned will be clean. As a result, the influence of the presence of any debris within said portion of the personal care device on the measurement of the electric current in the motor for the determination of the quantitative condition will be limited. In particular, the quantitative condition can be determined with sufficient accuracy immediately after the cleaning program, i.e., without first removing the personal care device from the cleaning device.

In embodiments of the cleaning device and the personal care system according to the invention, the personal care device is an electric shaver comprising a main body and a shaving unit coupled to the main body, and the receiving chamber of the cleaning device is configured to receive the shaving unit of the electric shaver in the cleaning position within the cleaning chamber. The cleaning device according to the invention may however also be used to clean other types of personal care devices or a portion thereof, and the personal care system according to the invention may comprise another type of personal care device, such as any of the types of personal care devices mentioned here before in the section "background of the invention".

In further embodiments of the cleaning device and the personal care system according to the invention: the shaving unit comprises at least one hair-cutting unit having an external cutting member with hair-entry openings and an internal cutting member with cutting elements covered by the external cutting member and movable relative to the external cutting member; and the cleaning device comprises, for each hair-cutting unit, at least one liquid-injection nozzle configured and arranged in the receiving chamber to provide, when the shaving unit is in the cleaning position, a jet of the cleaning liquid propagating directly through at least one of the hair-entry openings into the respective hair-cutting unit. In these embodiments each liquid-injection nozzle generates a flow of the cleaning liquid through the associated hair-cutting unit of the shaving unit in the receiving chamber of the cleaning device. This will provide a thorough cleaning of the hair-cutting units of the shaving unit. In addition it was found that, due to the flow of the cleaning liquid through the hair-cutting units, the extent of the increase of the electric current in the motor with increasing motor speed will be even more significant when the quantity of the cleaning liquid in the cleaning device is sufficient for the liquid-displacing member to generate a continuous uninterrupted flow of the cleaning liquid from the reservoir to the receiving chamber.

The above-described and other aspects of the invention will be apparent from and elucidated with reference to the following detailed description of embodiments of a computer-implemented method, a cleaning device and a personal care system in accordance with the invention.

### BRIEF DESCRIPTION OF THE DRAWINGS

The invention will be explained in greater detail with reference to the Figures, in which equal or similar features are indicated by the same reference signs, and in which:
Fig. 1 shows a cross section of an embodiment of a cleaning device according to the invention;
Fig. 2 schematically shows an embodiment of a personal care system according to the invention;
Fig. 3 shows a cleaning device of the personal care system of Fig. 2 in top view;
Fig. 4 shows a shaving unit of an electric shaver of the personal care system of Fig. 2 in top view;
Fig. 5 schematically shows a block diagram of a control system of the cleaning device of Fig. 1 and of the personal care system of Fig. 2;
Fig. 6 is a flow chart of a first embodiment of a computer-implemented method in accordance with the invention for determining a quantitative condition of a cleaning liquid in the cleaning devices of Fig. 1 and Fig. 3;
Fig. 7 shows, for the personal care system of Fig. 2, a measured electric current in a motor of an electric shaver of the personal care system as a function of the motor speed when driving the cleaning device of the personal care system, as used for the method of Fig. 6;
Fig. 8 is a flow chart of a second embodiment of a computer-implemented method in accordance with the invention for determining the quantitative condition of the cleaning liquid in the cleaning devices of Fig. 1 and Fig. 3;
Fig. 9 shows, for the personal care system of Fig. 2, the measured electric current in the motor of the electric shaver of the personal care system as a function of the motor speed when driving the cleaning device of the personal care system, as used for the method of Fig. 8;
Fig. 10 shows, for the personal care system of Fig. 2, the measured electric current in the motor of the electric shaver of the personal care system during a cleaning program of the cleaning device of the personal care system that is followed by the method of Fig. 6; and
Fig. 11 shows, for the personal care system of Fig. 2, the measured electric current in the motor of the electric shaver of the personal care system during a cleaning program of the cleaning device of the personal care system that is followed by the method of Fig. 8.

### DETAILED DESCRIPTION OF THE EMBODIMENTS

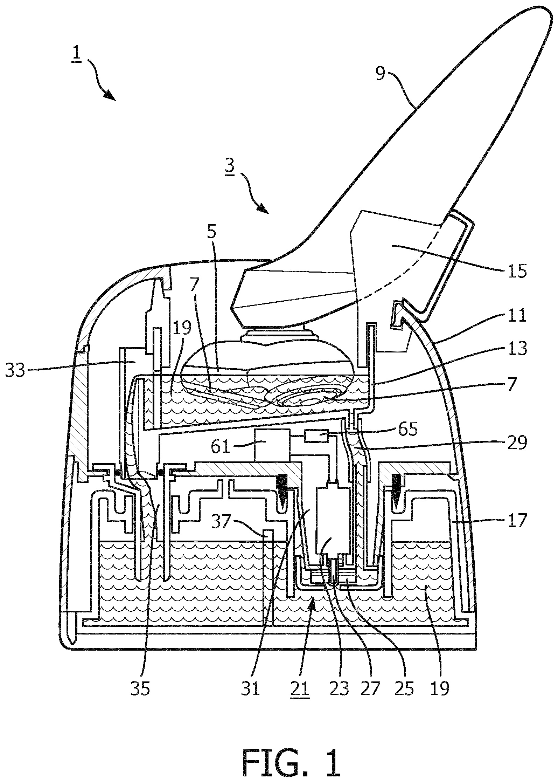

Fig. 1 shows a cross section of an embodiment of a cleaning device 1 according to the invention. The cleaning device 1 is configured for cleaning a personal care device, in this embodiment an electric shaver 3. In particular, in this embodiment the cleaning device 1 is configured for cleaning a shaving unit 5 of the electric shaver 3. In this embodiment the shaving unit 5 has three hair-cutting units 7 of a rotary type and is coupled to a main body 9 of the electric shaver 3 which is intended to be held by a hand of a user during use of the electric shaver 3. The hair-cutting units 7 are partially visible in Fig. 1. Electric shavers with hair-cutting units of a rotary type are well known to the person skilled in the art. Therefore, the electric shaver 3, the shaving unit 5 and the hair-cutting units 7 will not be described in further detail.

It is noted that the invention also covers embodiments of a cleaning device for cleaning a personal care device of a type different from the electric shaver 3, for example an electric shaver of a linearly reciprocating type or a personal care device of a type different from an electric shaver such as, e.g., a hair-trimming device, a non-electric hair-cutting device such as a blade razor, an intense pulsed light (IPL) device, a brushing device for facial cleansing, a toothbrush, or a light-based or radiofrequency energy-based skin rejuvenation device. All these types of personal care devices are well known to the person skilled in the art. Such a personal care device may have a main body and a personal care treatment unit, which is arranged on the main body and configured to provide a personal care treatment to a body part of the user. A cleaning device according to the invention may be configured to clean at least a portion of the personal care device, in particular at least a portion of the personal care treatment unit.

As shown in Fig. 1, the cleaning device 1 comprises a housing 11. Within the housing 11 a receiving chamber 13 is provided. The receiving chamber 13 is configured to receive at least a portion of the shaving unit 5, in particular a portion of the shaving unit 5 comprising the hair-cutting units 7. For this purpose, the cleaning device 1 comprises a holder 15 which is configured to grip and hold the main body 9 of the electric shaver 3 such that the shaving unit 5 is held in a stationary cleaning position within the receiving chamber 13. The holder 15 is connected to or part of the housing 11 of the cleaning device 1. A user can simply place the electric shaver 3 in the cleaning device 1 by placing the main body 9 into the holder 15 and can simply remove the electric shaver 3 from the cleaning device 1 by removing the main body 9 from the holder 15. In general, in a cleaning device according to the invention the receiving chamber is configured to receive at least a portion of the personal care device to be cleaned in a cleaning position within the receiving chamber.

As shown in Fig. 1, a reservoir 17 is arranged within the housing 11. The reservoir 17 is configured to hold a cleaning liquid 19. In the embodiment shown in Fig. 1 the reservoir 17 can be removed from the cleaning device 1, e.g., when after repeated use of the cleaning device 1 a remaining amount or level of the cleaning liquid 19 in the reservoir 17 is too small or too low or a degree of contamination of the remaining cleaning liquid 19 is too high. For this purpose, a user may lift the housing 11 including all other parts of the cleaning device 1 from the reservoir 17 and may place the housing 11 onto a replacement reservoir containing fresh cleaning liquid. In other embodiments the reservoir may be integrally formed with the housing of the cleaning device, and the housing and/or the reservoir may, e.g., be provided with a suitable closable opening via which the user may refill the reservoir with fresh cleaning liquid.

As shown in Fig. 1, the cleaning device 1 further comprises a liquid-displacing member 21 and an electric motor 23 configured and arranged to drive the liquid-displacing member 21. The liquid-displacing member 21 is configured to displace the cleaning liquid 19 from the reservoir 17 to the receiving chamber 13 for cleaning the shaving unit 5. In the embodiment shown in Fig. 1, the liquid-displacing member 21 comprises an impeller wheel 25 mounted to a drive shaft 27 of the electric motor 23. The impeller wheel 25 is arranged in a lower portion of a fluid channel 29 which connects the reservoir 17 with the receiving chamber 13. The electric motor 23 is arranged in a watertight motor chamber 31 within the housing 11. During use, by the action of the impeller wheel 25 the cleaning liquid 19 is displaced from the reservoir 17 to the receiving chamber 13 via the fluid channel 29. The receiving chamber 13 comprises an overflow opening 33 which defines a maximum level of the cleaning liquid 19 in the receiving chamber 13. The cleaning liquid 19 is enabled to flow from the receiving chamber 13 back to the reservoir 17 via the overflow opening 33 and a return channel 35. Within the reservoir 17 a filter 37 is arranged to filter out any contaminants present in the flow of cleaning liquid 19.

The cleaning device 1 further comprises a processor 61 which is configured to control the electric motor 23. In the embodiment of the cleaning device 1, the processor 61 is accommodated in the housing 11 of the cleaning device 1, as schematically shown in Fig. 1. In particular, the processor 61 is configured, e.g., programmed, to control a motor speed of the electric motor 23 as a function of time according to a predefined cleaning program. As known to the skilled person, the cleaning program may comprise a number of sequential cleaning phases which are separated by interrupt phases. During each cleaning phase the electric motor 23 may be driven for a predefined time period and at a predefined motor speed, wherein said predefined time period and/or said predefined motor speed may be different for the different cleaning phases. During the interrupt phases the electric motor 23 is not driven. A user may start the cleaning program by means of a user interface (not shown in Fig. 1) provided on the housing 11. Alternatively, the user may start the cleaning program by means of a remote device, e.g., a smart phone, which is in data communication (e.g., wirelessly) with the cleaning device 1. The user may be informed about the progress of the cleaning program via the same user interface or remote device.

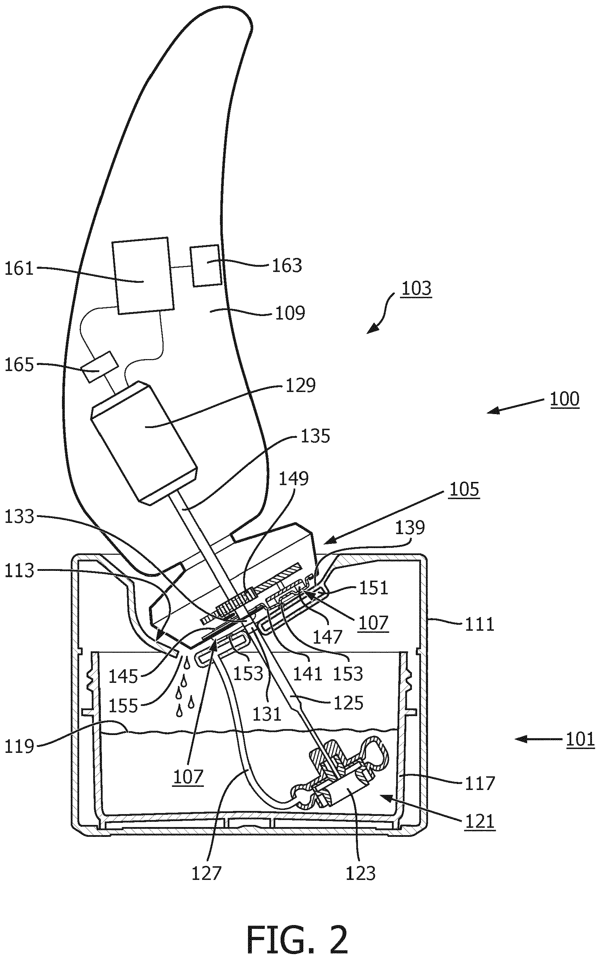

Fig. 2 schematically shows an embodiment of a personal care system 100 according to the invention. The personal care system 100 comprises a personal care device, in this embodiment an electric shaver 103, and a cleaning device 101 for the electric shaver 103. In particular, in this embodiment the cleaning device 101 is configured for cleaning a shaving unit 105 of the electric shaver 103. In this embodiment the shaving unit 105 has three hair-cutting units 107 of a rotary type and is coupled to a main body 109 of the electric shaver 103 which is intended to be held by a hand of a user during use of the electric shaver 103. The hair-cutting units 107 are partially visible in Fig. 2. The invention also covers embodiments of a personal care system having a cleaning device and a personal care device of a type different from the electric shaver 103, as described hereinbefore with respect to the embodiment of the cleaning device 1 according to the invention.

As shown in Fig. 2, the cleaning device 101 of the personal care system 100 comprises a housing 111. Within the housing 111 a receiving chamber 113 is provided. The receiving chamber 113 is configured to receive at least a portion of the shaving unit 105 of the electric shaver 103, in particular a portion of the shaving unit 105 comprising the hair-cutting units 107. For this purpose, the cleaning device 101 may comprise a holder (not shown in Fig. 2) similar to the holder 15 of the cleaning device 1 as described hereinbefore and configured to grip and hold the main body 109 of the electric shaver 103 such that the shaving unit 105 is held in a stationary cleaning position within the receiving chamber 113. A user may easily place the electric shaver 103 in the cleaning device 101 for cleaning of the shaving unit 105 and may easily remove the electric shaver 103 from the cleaning device 101 after the cleaning process.

As shown in Fig. 2, a reservoir 117 is arranged within the housing 111 of the cleaning device 101. The reservoir 117 is configured to hold a cleaning liquid 119. Similar to the reservoir 17 of the cleaning device 1 as described hereinbefore, the reservoir 117 may be removably arranged in the housing 111 or integral with the housing 111.

As shown in Fig. 2, the cleaning device 101 of the personal care system 100 further comprises a liquid-displacing member 121 configured to displace the cleaning liquid 119 from the reservoir 117 to the receiving chamber 113 for cleaning the shaving unit 105. In the embodiment shown in Fig. 2, the liquid-displacing member 121 comprises an impeller wheel 123 mounted to a drive shaft 125. The impeller wheel 123 is arranged in a lower portion of a fluid channel 127 which connects the reservoir 117 with the receiving chamber 113.

The personal care system 100 is of a type as disclosed in EP 3 737 257 B1 and EP 3 924 153 B1, both in the name of the applicant, wherein the liquid-displacing member 121 of the cleaning device 101 is drivable by an electric motor 129 of the electric shaver 103 when the shaving unit 105 of the electric shaver 103 is in the cleaning position within the receiving chamber 113 of the cleaning device 101, as shown in Fig. 2. For this purpose, the cleaning device 101 comprises a driven coupling member 131 which is connected to the impeller wheel 123 of the liquid-displacing member 121 via the drive shaft 125. The shaving unit 105 of the electric shaver 103 comprises a driving coupling member 133 which is connected to the electric motor 129 of the electric shaver 103. Fig. 2 only schematically shows that the electric motor 129 is arranged in the main body 109 of the electric shaver 103 and that the driving coupling member 133 is connected to the electric motor 129 via a drive shaft 135 in the electric shaver 103. Further details of the connection of the driving coupling member 133 to the electric motor 129 are described in EP 3 737 257 B1.

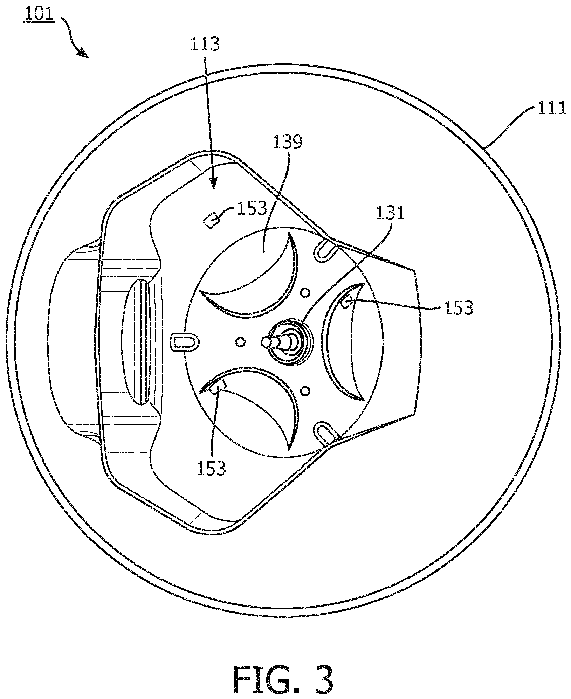

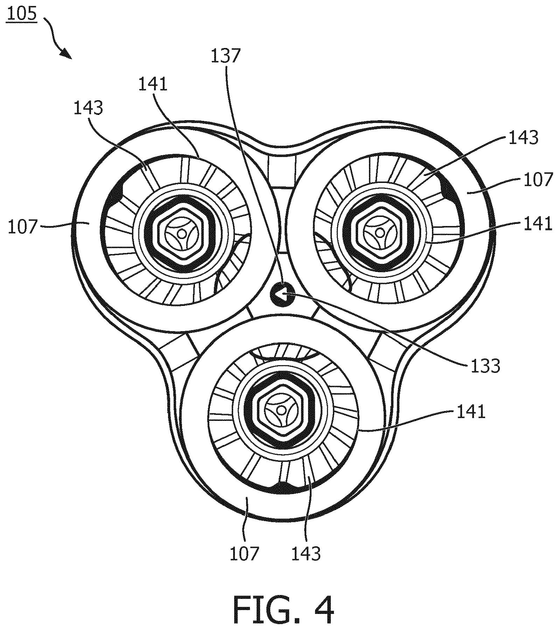

The driven coupling member 131 of the cleaning device 101 and the driving coupling member 133 of the shaving unit 105 are only schematically shown in Fig. 2. As shown in Fig. 4, the driving coupling member 133 is arranged in a central position 137 between the three hair-cutting units 107 of the shaving unit 105. As shown in Fig. 3, the driven coupling member 131 is arranged in a central position in a bottom wall 139 of the receiving chamber 113 of the cleaning device 101. In this way, the driven coupling member 131 of the cleaning device 101 and the driving coupling member 133 of the electric shaver 103 are arranged to be mutually coupled when the shaving unit 105 is in the cleaning position within the receiving chamber 113, so that the liquid-displacing member 121 of the cleaning device 101 is drivable by the electric motor 129 of the electric shaver 103.

As shown in Fig. 2 and Fig. 4, the hair-cutting units 107 each comprise, in a manner well known to the skilled person, an external cutting member 141 with hair-entry openings 143 and an internal cutting member 145 with cutting elements 147 covered by the external cutting member 141. The internal cutting member 145 of each hair-cutting unit 107 is movable, in particular rotatable, relative to the external cutting member 141 by the electric motor 129 of the electric shaver 103 via the drive shaft 135 and a transmission unit 149, which is arranged in the shaving unit 105 and coupled to the drive shaft 135 and the internal cutting members 145.

In the embodiment shown in Fig. 2, the fluid channel 127 is connected to a plenum chamber 151 which is integrally formed with the bottom wall 139 of the receiving chamber 113. The cleaning device 101 comprises, for each of the three hair-cutting units 107 of the shaving unit 105, at least one liquid-injection nozzle 153 which is arranged in the bottom wall 139 in fluid communication with the plenum chamber 151. As shown in Fig. 3, in this embodiment a single liquid-injection nozzle 153 (only schematically shown) is provided for each of the three hair-cutting units 107. Each liquid-injection nozzle 153 is configured and arranged in the bottom wall 139 of the receiving chamber 113 to provide, when the shaving unit 105 is in the cleaning position within the receiving chamber 113 and the liquid-displacing member 121 is driven by the electric motor 129, a jet of the cleaning liquid 119 propagating directly through at least one of the hair-entry openings 143 of the external cutting member 141 into the hair-cutting unit 107 associated with the liquid-injection nozzle 153. After flowing through the hair-cutting units 107 the cleaning liquid 119 will leave the hair-cutting units 107 again via some of the hair-entry openings 143 of the external cutting members 141 and will be enabled to flow back to the reservoir 117 via a return opening 155 provided in the bottom wall 139 of the receiving chamber 113, as shown in Fig. 2.

The electric shaver 103 of the personal care system 100 further comprises a processor 161 which is configured to control the electric motor 129. In the embodiment of the personal care system 100, the processor 161 is accommodated in the main body 109 of the electric shaver 103, as schematically shown in Fig. 2. During a shaving session, i.e., when the electric shaver 103 is not arranged in the cleaning device 101, the processor 161 may control the electric motor 129 to run at a predefined motor speed optimal for the shaving process, as will be well-known to the skilled person. When the electric shaver 103 is arranged in the cleaning device 101, the processor 161 will receive a position signal from a position sensor 163 arranged in the main body 109 of the electric shaver 103, as schematically shown in Fig. 2. In this embodiment, the position sensor 163 is an orientation sensor configured to detect a characteristic orientation of the main body 109 of the electric shaver 103 relative to Earth's gravitational field when the shaving unit 105 of the electric shaver 103 is in the cleaning position within the cleaning chamber 113 of the cleaning device 101. Further details of the position sensor 163 and the use thereof to detect the presence of the electric shaver 103 in the cleaning device 101 are described in EP 3 771 528 A1 in the name of the applicant.

The processor 161 is configured, e.g., programmed, to control a motor speed of the electric motor 129 as a function of time according to a predefined cleaning program when the position sensor 163 detects the presence of the electric shaver 103 in the cleaning device 101, as described hereinbefore. The cleaning program may be of a type as described hereinbefore for the cleaning device 1. A user may start the cleaning program by means of a user interface (not shown in Fig. 2) provided on the main body 109 of the electric shaver 103. Alternatively, the user may start the cleaning program by means of a remote device, e.g., a smart phone, which is in data communication (e.g., wirelessly) with the electric shaver 103. Still alternatively, the processor 161 may start the cleaning program automatically when the position sensor 163 detects the presence of the electric shaver 103 in the cleaning device 101. The user may be informed about the progress of the cleaning program via the same user interface or remote device.

In accordance with the invention, the processor 61 of the cleaning device 1 as described hereinbefore with reference to Fig. 1 and the processor 161 of the electric shaver 103 of the personal care system 100 as described hereinbefore with reference to Figs. 2-4 are each configured, e.g., programmed, to perform, i.e., execute, a computer-implemented method in accordance with the invention to determine a quantitative condition of the cleaning liquid 19, 119 in the cleaning device 1, 101. In particular, according to the method the quantitative condition of the cleaning liquid 19, 119 in the cleaning device 1, 101 is determined based on a determined electric current in the electric motor 23, 129, i.e., when the electric motor 23, 129 is driving the liquid-displacing member 21, 121 of the cleaning device 1, 101, and based on a predetermined relation between the quantitative condition of the cleaning liquid 19, 119 and the electric current in the electric motor 23, 129. For this purpose, the cleaning device 1 and the electric shaver 103 each comprise a sensor 65, 165, which is configured to measure an electric current in the electric motor 23, 129 and provide a sensor output S_{IM} relating to the measured electric current in the electric motor 23, 129. The sensors 65, 165 are schematically shown in Fig. 1 and Fig. 2.

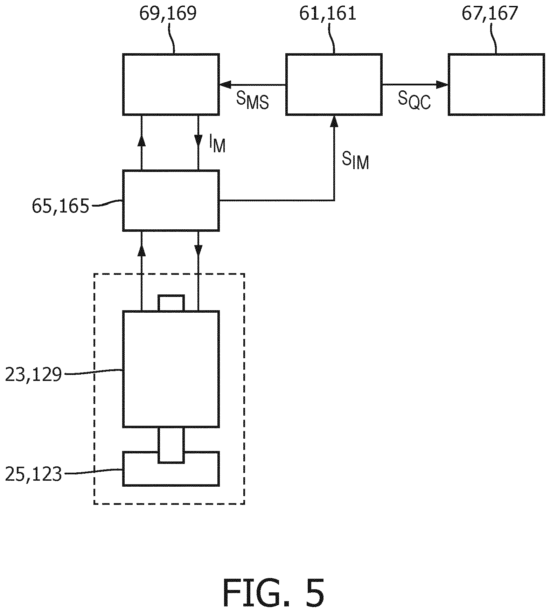

The block diagram of Fig. 5 schematically shows that, in a control system for the electric motor 23, 129 of the cleaning device 1 and the electric shaver 103 of the personal care system 100, the processor 61, 161 is configured to receive the sensor output S_{IM} from the sensor 65, 165. The processor 61, 161 is configured to determine, based on the sensor output S_{IM}, the quantitative condition of the cleaning liquid 19, 119 in the cleaning device 1, 101. In the embodiment shown in Fig. 5, the processor 61, 161 is further configured to provide a feedback signal S_{QC} related to the determined quantitative condition of the cleaning liquid 19, 119 to a feedback member 67, 167 of, respectively, the cleaning device 1 and the electric shaver 103 to inform the user about the determined quantitative condition of the cleaning liquid 19, 119. The feedback member 67, 167, which is not shown in Fig. 1 and Fig. 2, may comprise a display. Alternatively, the feedback member may be part of a remote device, e.g., a smart phone, in data communication with the cleaning device 1 or the electric shaver 103.

Fig. 5 further shows that the processor 61, 161 is configured to provide an output signal S_{MS} to a motor driver 69, 169 which is configured to provide the electric current I_{M} to the electric motor 23, 129 based on the output signal S_{MS}. In the embodiment shown, the output signal S_{MS} represents a required motor speed MS of the electric motor 23, 129. The motor driver 69, 169 is configured to control the electric current I_{M}, in a manner which is well-known to the skilled person, such that the electric motor 23, 129 runs at the motor speed MS represented by the output signal S_{MS}.

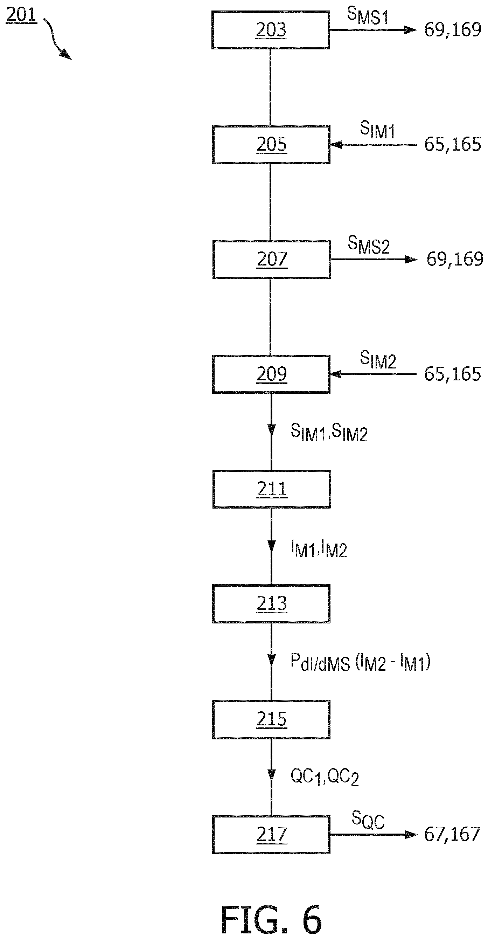

A first embodiment of a computer-implemented method 201 in accordance with the invention for determining the quantitative condition of the cleaning liquid 19, 119 in the cleaning devices 1, 101, as executed by the processors 61, 161, is illustrated by the flow chart of Fig. 6. In a first step 203 of the method 201, the electric motor 23, 129 is controlled to run at a first motor speed MS₁, in particular by supplying an output signal S_{MS1} representing the first motor speed MS₁ to the motor driver 69, 169. In a second step 205 of the method 201, the sensor output S_{IM1} is received from the sensor 65, 165, which represents the electric current I_{M1} in the electric motor 23, 129 measured at the first motor speed MS₁. In a third step 207 of the method 201, the electric motor 23, 129 is controlled to run at a second motor speed MS₂ different from the first motor speed MS₁, in particular by supplying an output signal S_{MS2} representing the second motor speed MS₂ to the motor driver 69, 169. In a fourth step 209 of the method 201, the sensor output S_{IM2} is received from the sensor 65, 165, which represents the electric current I_{M2} in the electric motor 23, 129 measured at the second motor speed MS₂. In the first embodiment of the method 201 shown in Fig. 6, the second motor speed MS₂ is larger than the first motor speed MS₁. In a fifth step 211 of the method 201, the electric currents I_{M1} and I_{M2} in the electric motor 23, 129 for, respectively, the first motor speed MS₁ and the second motor speed MS₂ are determined from, respectively, the received sensor outputs S_{IM1} and S_{IM2}.

In a sixth step 213 of the method 201, based on the electric currents I_{M1} and I_{M2} determined for the first and second motor speeds MS₁ and MS₂, a value of a parameter P_{dI/dMS} is determined, said parameter P_{dI/dMS} being associated with an extent to which the electric current I_{M} in the electric motor 23, 129 changes in dependence on the motor speed. In the first embodiment of the method 201 shown in Fig. 6, said parameter P_{dI/dMS} is a difference I_{M2} - I_{M1} between the electric currents I_{M1} and I_{M2} determined for the first and second motor speeds MS₁ and MS₂. In a seventh step 215 of the method 201, the quantitative condition of the cleaning liquid 19, 119 in the cleaning device 1, 101 is determined based on the determined value of the parameter P_{dl/dMS}, i.e., based on the determined difference I_{M2} - I_{M1}, and based on a predetermined relation between the quantitative condition of the cleaning liquid 19, 119 and the parameter P_{dI/dMS}. In the first embodiment of the method 201 shown in Fig. 6, said predetermined relation defines that the cleaning liquid 19, 119 has a first quantitative condition QC₁ when the determined value of the parameter P_{dI/dMS}, in this embodiment the difference I_{M2} - I_{M1}, is above a first predetermined threshold value P_{TH1}, and that the cleaning liquid 19, 119 has a second quantitative condition QC₂ different from the first quantitative condition QC₁ when the determined value of the parameter P_{dl/dMS}, in this embodiment the difference I_{M2} - I_{M1}, is below the first predetermined threshold value P_{TH1}. In particular, in the first embodiment of the method 201 the first quantitative condition QC₁ corresponds to a quantity of the cleaning liquid 19, 119 which enables the generation of an uninterrupted flow of the cleaning liquid 19, 119 by the liquid-displacing member 21, 121, to be indicated to the user as "sufficient". The second quantitative condition QC₂ corresponds to a quantity of the cleaning liquid 19, 119 which does not enable the generation of a flow of the cleaning liquid 19, 119 by the liquid-displacing member 21, 121, to be indicated to the user as "insufficient".

In an eighth step 217 of the method 201, the feedback signal S_{QC} as described hereinbefore and relating to the determined quantitative condition of the cleaning liquid 19, 119, i.e., the first or the second quantitative condition QC₁, QC₂, is provided to the feedback member 67, 167 to inform the user of the cleaning device 1, 101 about the determined quantitative condition.

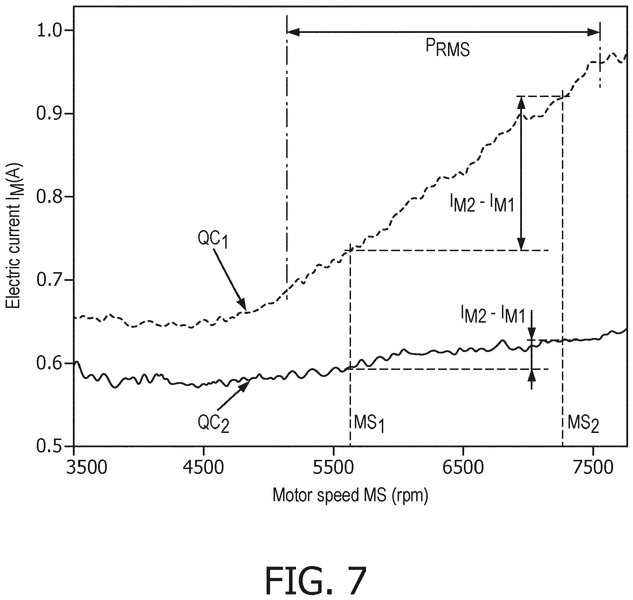

Fig. 7 shows, for the embodiment of the personal care system 100 as shown in Fig. 2, the measured electric current I_{M} in the electric motor 129 of the electric shaver 103 as a function of the motor speed MS when the electric motor 129 is driving the liquid-displacing member 121 of the cleaning device 101, i.e., in the cleaning position of the electric shaver 103 as shown in Fig. 2. In particular, Fig. 7 shows the measured electric current I_{M} for the first quantitative condition QC₁ of the cleaning liquid 119 in the cleaning device 101 as mentioned hereinbefore, which corresponds to a quantity of the cleaning liquid 119 sufficient to enable the generation of a continuous uninterrupted flow of the cleaning liquid 119 from the reservoir 117 to the receiving chamber 113 by the liquid-displacing member 121, and for the second quantitative condition QC₂ of the cleaning liquid 119 in the cleaning device 101 as mentioned hereinbefore, which corresponds to a quantity of the cleaning liquid 119 insufficient to enable the generation of a flow of the cleaning liquid 119 from the reservoir 117 to the receiving chamber 113 by the liquid-displacing member 121. As shown in Fig. 7, for said first quantitative condition QC₁ the measured electric current I_{M} significantly increases with increasing motor speed MS. For said second quantitative condition QC₂ the increase of the measured electric current I_{M} with increasing motor speed MS is much less pronounced.

As shown in Fig. 7, for the embodiment of the personal care system 100 the significant increase of the electric current I_{M} with increasing motor speed MS for the first quantitative condition QC₁, i.e., a quantity of the cleaning liquid 119 sufficient for a normal uninterrupted flow of the cleaning liquid 119 in the cleaning device 101, occurs within a substantial subrange P_{RMS} of the range of the motor speed MS. It is to be noted that the motor speeds MS applied during the cleaning program of the cleaning device 101 usually are within said subrange P_{RMS}. In addition, Fig. 7 shows that, within this subrange P_{RMS}, the increase of the electric current I_{M} is nearly linear with the increase of the motor speed MS. Therefore, by measuring the electric current I_{M} only at two different motor speeds MS₁ and MS₂ within this subrange P_{RMS} according to the first embodiment of the method 201 as described hereinbefore, the extent to which the electric current I_{M} in the electric motor 129 changes in dependence on the motor speed MS can be accurately represented by the relatively simple parameter P_{dI/dMS} as used in the first embodiment of the method 201, i.e., the difference I_{M2} - I_{M1} between the electric currents I_{M1} and I_{M2} determined for the two different motor speeds MS₁ and MS₂ as described hereinbefore. In the embodiment shown in Fig. 7, the first motor speeds MS₁ is about 5600 rpm and the second motor speed MS₂ is about 7300 rpm. As shown in Fig. 7, the difference I_{M2} - I_{M1} for the first quantitative condition QC₁ is significantly higher than the difference I_{M2} - I_{M1} for the second quantitative condition QC₂. As a result, in the first embodiment of the method 201 the first quantitative condition QC₁ can be simply and robustly distinguished from the second quantitative condition QC₂ by determining whether the measured difference I_{M2} - I_{M1} is above or below the first predefined threshold value P_{TH1} as described hereinbefore. It is noted that a skilled person will be able to determine a suitable value for the first threshold value P_{TH1} based on simple and straightforward experiments.

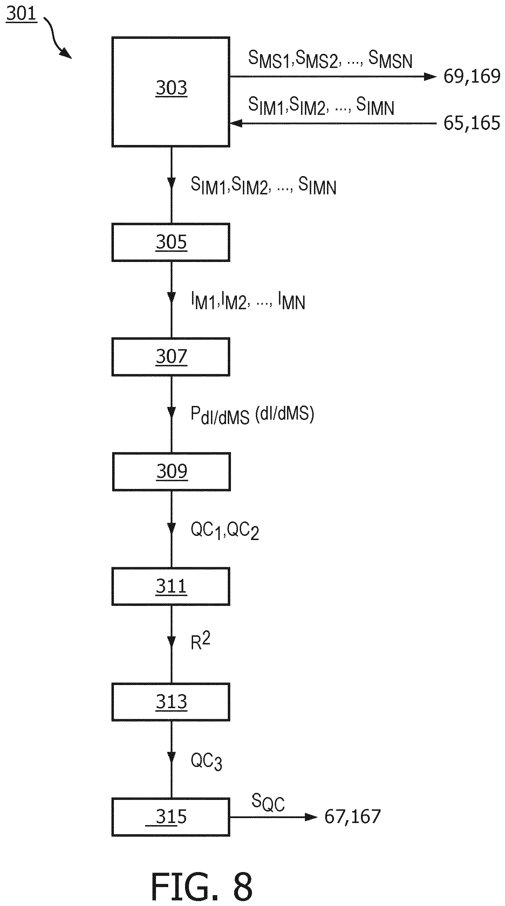

A second embodiment of a computer-implemented method 301 in accordance with the invention for determining the quantitative condition of the cleaning liquid 19, 119 in the cleaning devices 1, 101, as executed by the processors 61, 161, is illustrated by the flow chart of Fig. 8. Whereas in the first embodiment of the method 201 the electric motor 23, 129 is controlled to run only at two different motor speeds MS₁, MS₂ and the sensor outputs S_{IM1}, S_{IM2} are received from the sensor 65, 165 only for these two different motor speeds MS₁, MS₂, in the second embodiment of the method 301 the electric motor 23, 129 is controlled to successively run at a plurality N of different motor speeds MS₁, MS₂, ..., MS_{N} within a range P_{MS} of motor speeds, in particular by successively supplying the output signals S_{MS1}, S_{MS2}, ..., S_{MSN} respectively representing the N different motor speeds to the motor driver 69, 169. Consequently, the sensor outputs S_{IM1}, S_{IM2}, ..., S_{IMN}, respectively representing the electric currents I_{M1}, I_{M2}, ... , I_{MN} in the electric motor 23, 129 measured for the N different motor speeds, are successively received from the sensor 65, 165 for each motor speed of said N different motor speeds. For simplicity, in the flow chart of Fig. 8 these steps of controlling the electric motor 23, 129 to run at the N different motor speeds and receiving the sensor output S_{IM} for each of the N different motor speeds are indicated as a single first step 303 of the method 301.

Preferably, during the first step 303 of the method 301 the electric motor 23, 129 is controlled to change the motor speed MS from a first end value MS₁ of the range P_{MS} of motor speeds to a second end value MS_{N} of the range P_{MS} of motor speeds gradually or linearly over a predefined time period. As a result, a user may experience the change of the motor speed MS, required for the measurement of the electric current I_{M} in the electric motor 23, 129 at the N different motor speeds MS₁, MS₂, ..., MS_{N} within the range P_{MS} of motor speeds, as not disturbing or annoying. During said gradual change of the motor speed MS, the electric currents I_{M1}, I_{M2}, ... , I_{MN} in the electric motor 23, 129 may each be measured and registered in the first step 303 of the method 301 when the motor speed MS reaches each respective one of the N different motor speeds MS₁, MS₂, ..., MS_{N}.

In a second step 305 of the method 301, the electric currents I_{M1}, I_{M2}, ..., I_{IMN} in the electric motor 23, 129 for, respectively, the N different motor speeds MS₁, MS₂, ..., MS_{N} are determined from, respectively, the received sensor outputs S_{IM1}, S_{IM2}, ..., S_{IMN}.

In a third step 307 of the method 301, based on the electric currents I_{M1}, I_{M2}, ... , I_{IMN} determined for the N different motor speeds MS₁, MS₂, ..., MS_{N}, a value of the parameter P_{dI/dMS} is determined. In the second embodiment of the method 301 shown in Fig. 8, said parameter P_{dI/MS} is a slope dI/dMS of a linear regression relationship between said N different motor speeds MS₁, MS₂, ..., MS_{N} and the electric currents I_{M1}, I_{M2}, ... , I_{IMN} determined for each motor speed of said N different motor speeds.

In a fourth step 309 of the method 301, the quantitative condition of the cleaning liquid 19, 119 in the cleaning device 1, 101 is determined based on the determined value of the parameter P_{dI/dMS}, i.e., based on the determined value of said slope dI/dMS, and based on a predetermined relation between the quantitative condition of the cleaning liquid 19, 119 and the parameter P_{dI/dMS}. In the second embodiment of the method 301 shown in Fig. 8, said predetermined relation defines that the cleaning liquid 19, 119 has a first quantitative condition QC₁ when the determined value of the parameter P_{dI/dMS}, in this embodiment the value of the slope dI/dMS, is above a predetermined second threshold value P_{TH2}, and that the cleaning liquid 19, 119 has a second quantitative condition QC₂ different from the first quantitative condition QC₁ when the determined value of the parameter P_{dI/dMS}, in this embodiment the value of the slope dI/dMS, is below the predetermined second threshold value P_{TH2}. Similar to the first embodiment of the method 201 as described hereinbefore, in the second embodiment of the method 301 the first quantitative condition QC₁ corresponds to a quantity of the cleaning liquid 19, 119 which enables the generation of an uninterrupted flow of the cleaning liquid 19, 119 by the liquid-displacing member 21, 121, to be indicated to the user as "sufficient". The second quantitative condition QC₂ corresponds to a quantity of the cleaning liquid 19, 119 which does not enable the generation of a flow of the cleaning liquid 19, 119 by the liquid-displacing member 21, 121, to be indicated to the user as "insufficient".

Optionally, in a fifth step 311 of the method 301, a coefficient of determination, R², is determined, which is associated with the linear regression relationship, as determined in the third step 307 of the method 301, between the N different motor speeds MS₁, MS₂, ..., MS_{N} and the electric currents I_{M1}, I_{M2}, ... , I_{IMN} determined for each of the N different motor speeds. In an optional sixth step 313 of the method 301, it is determined that the cleaning liquid 19, 119 in the cleaning device 1, 101 has a third quantitative condition QC₃, different from the first and second quantitative conditions QC₁,QC₂ as described in relation to the fourth step 309 of the method 301, when the determined coefficient of determination, R², is below a predefined third threshold value P_{TH3}. Instead of the coefficient of determination, R², a different correlation coefficient may be determined, such as the Pearson coefficient. In these optional fifth and sixth steps 311, 313 of the second embodiment of the method 301, the third quantitative condition QC₃ corresponds to a transition state of the quantity of the cleaning liquid 19, 119 in the cleaning device 1, 101 from the first quantitative condition QC₁, i.e., sufficient for a continuous uninterrupted flow of the cleaning liquid 19, 119 in the cleaning device 1, 101, to the second quantitative condition QC₂, i.e. insufficient for any flow of the cleaning liquid 19, 119 in the cleaning device 1, 101.

In a seventh step 315 of the method 301, the feedback signal S_{QC} as described hereinbefore and relating to the determined quantitative condition of the cleaning liquid 19, 119, i.e., the first or the second quantitative condition QC₁, QC₂ or, optionally, the third quantitative condition QC₃, is provided to the feedback member 67, 167 to inform the user of the cleaning device 1, 101 about the determined quantitative condition.

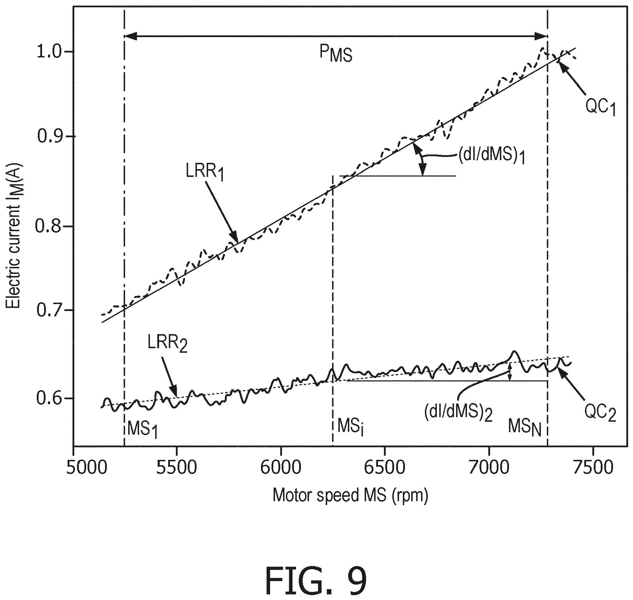

Similar to Fig. 7, Fig. 9 shows, for the embodiment of the personal care system 100 as shown in Fig. 2 and for the first and second quantitative conditions QC₁ and QC₂ of the cleaning liquid 119 in the cleaning device 101 as mentioned hereinbefore, the measured electric current I_{M} in the electric motor 129 of the electric shaver 103 as a function of the motor speed MS when the electric motor 129 is driving the liquid-displacing member 121 of the cleaning device 101, i.e., in the cleaning position of the electric shaver 103 as shown in Fig. 2. In particular, Fig. 9 shows the measured electric current I_{M} within the subrange P_{RMS} of the range of the motor speed MS, as mentioned hereinbefore and as shown in Fig. 7. For simplicity, Fig. 9 only indicates, from the plurality N of different motor speeds MS₁, MS₂, ..., MS_{N} within the range P_{MS} of motor speeds at which the electric motor 129 of the electric shaver 103 is controlled to successively run according to the first step 303 of the second embodiment of the method 301 as described hereinbefore, only the first motor speed MS₁, in this example about 5200 rpm, the N^{th} motor speed MS_{N}, in this example about 7300 rpm, and an arbitrary intermediate motor speed MSᵢ (1 < i < N).

Fig. 9 also indicates, for the first and second quantitative conditions QC₁ and QC₂ of the cleaning liquid 119 in the cleaning device 101, the linear regression relationships, respectively indicated as LRR₁ and LRR₂, between the N different motor speeds MS₁, MS₂, ..., MS_{N} and the electric currents I_{M1}, I_{M2}, ... , I_{IMN} in the electric motor 129 determined for the N different motor speeds according to the third step 307 of the method 301 as described hereinbefore. Fig. 9 further indicates, for the first and second quantitative conditions QC₁ and QC₂, the slopes (dI/dMS)₁ and (dI/dMS)₂ of the linear regression relationships LRR₁ and LRR₂, as determined in the fourth step 309 of the method 301 as described hereinbefore. By measuring the electric current I_{M} in the electric motor 129 at a plurality of different motor speeds MS, preferably three or more different motor speeds, the extent to which the electric current I_{M} in the electric motor 129 changes in dependence on the motor speed MS can be very accurately represented by the parameter P_{dI/dMS} as used in the second embodiment of the method 301, i.e. the value of the slope dI/dMS of the linear regression relationship between said plurality of different motor speeds MS and the electric currents I_{M} determined for the plurality of different motor speeds. As shown in Fig. 9, the value of slope (dI/dMS)₁ for the first quantitative condition QC₁ is significantly higher than the value of the slope (dI/dMS)₂ for the second quantitative condition QC₂. As a result, in the second embodiment of the method 301 the first quantitative condition QC₁ can be simply and robustly distinguished from the second quantitative condition QC₂ by determining whether the determined value of the slope dI/dMS is above or below the second predefined threshold value P_{TH2} as described hereinbefore. It is noted that a skilled person will be able to determine a suitable value for the second threshold value P_{TH2} based on simple and straightforward experiments.

As will be known to the skilled person, the coefficient of determination, R², or the Pearson coefficient, as may be determined in the fifth optional step 311 of the method 301 as described hereinbefore, are each a measure for the degree of variation within the measured relationship between the electric current I_{M} and the motor speed MS as shown in Fig. 9. A relatively small value of the determined coefficient of determination, R², usually corresponds with a relatively large degree of variation within said relationship. Because a relatively large degree of variation within said relationship indicates that the flow of the cleaning liquid 119 generated by the liquid-displacing member 121 is instable, a relatively small value of the determined coefficient of determination, R², indicates that the flow of the cleaning liquid 119 is instable, e.g., alternately stable and interrupted. Therefore, by determining in the optional sixth step 313 of the method 301 whether the determined coefficient of determination, R², is below said predefined third threshold value P_{TH3}, a third quantitative condition QC₃ of the cleaning liquid 119 in the cleaning device 101 may be determined relating to a transition state of the quantity of the cleaning liquid 119 from the first quantitative condition QC₁ to the second quantitative condition QC₂. A skilled person will be able to determine a suitable value for the third threshold value P_{TH3} based on simple and straightforward experiments. It is noted that, in Fig. 9, for simplicity the relation between the measured electric current I_{M} and the motor speed MS is not shown for the third quantitative condition QC₃.

The inventors found that, in the embodiment of the personal care system 100 as shown in Figs. 2-4, the flow of the cleaning liquid 119 through the hair-cutting units 107 provided by the liquid-injection nozzles 153 in the receiving chamber 113 of the cleaning device 101 contributes significantly to the relatively large value of the slope (dI/dMS)₁ in the first quantitative condition QC₁ of the cleaning liquid 119, as shown in Fig. 9. However, experiments have shown that also in other embodiments of the cleaning device and the personal care system, such as the embodiment of the cleaning device 1 as shown in Fig. 1, the difference between the values of the slope (dI/dMS)₁ and (dI/dMS)₂ for the first and second quantitative conditions QC₁ and QC₂ is sufficiently large to accurately and robustly distinguish between at least the first and second quantitative conditions QC₁ and QC₂ by means of the second embodiment of the method 301 according to the invention.

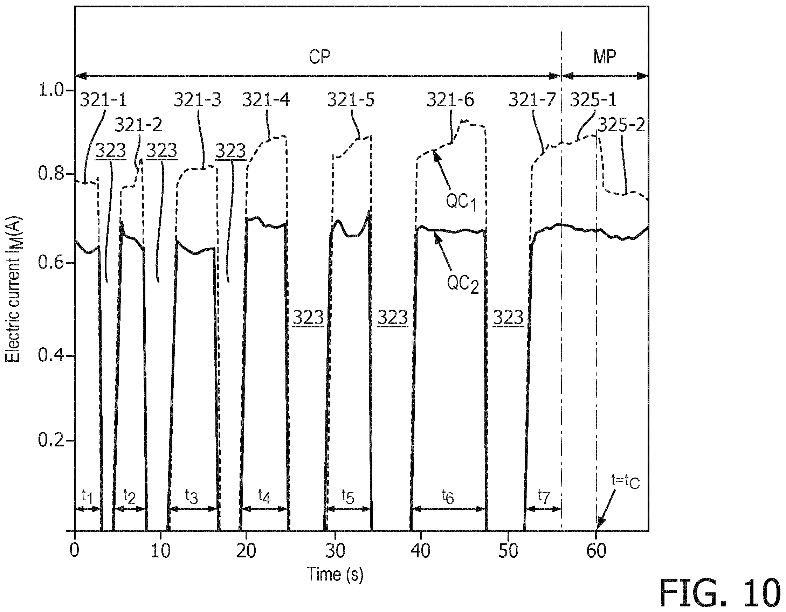

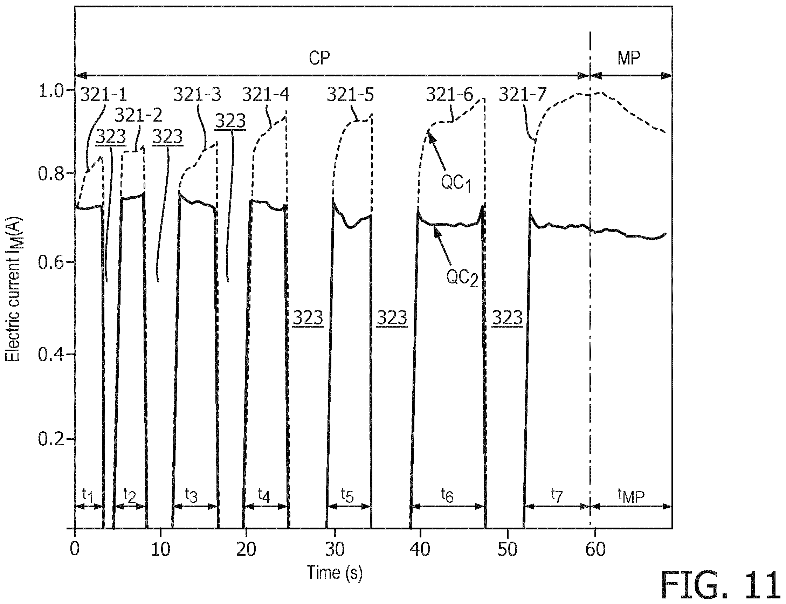

Fig. 10 and Fig. 11 both show, for the embodiment of the personal care system 100 as shown in Fig. 2, the measured electric current I_{M} in the electric motor 129 of the electric shaver 103 as a function of time during a cleaning program CP of the cleaning device 101, wherein the electric motor 129 is driving the liquid-displacing member 121 of the cleaning device 101 to perform the cleaning program CP. In both Figures the measured electric current I_{M} is shown for the first and second quantitative conditions QC₁ and QC₂ of the cleaning liquid 119 in the cleaning device 101. In the embodiment as shown in Fig. 10 and Fig. 11, the cleaning program CP comprises a number of sequential cleaning phases 321-i which are separated by interrupt phases 323. In particular, in this embodiment the cleaning program CP comprises 7 cleaning phases 321-1, 321-2, ..., 321-7. During the first, second and third cleaning phases 321-1, 321-2, 321-3 the electric motor 129 is driven for, respectively, a predefined time period t₁, t₂, t₃ and at a first predefined motor speed, in this example about 6400 rpm. As shown in Fig. 10 and Fig. 11, the time periods t₁, t₂, t₃ are mutually different and each last from a few seconds up to about 5 seconds. During the fourth, fifth, sixth and seventh cleaning phases 321-4, 321-5, 321-6, 321-7 the electric motor 129 is driven for, respectively, a predefined time period t₄, t₅, t₆, t₇ and at a second predefined motor speed, in this example about 7300 rpm. As shown in Fig. 10 and Fig. 11, the time periods t₄, t₅, t₆, t₇ are mutually different and each last from a few seconds up to about 10 seconds. The interrupt phases 323 between the cleaning phases 321-i, during which the electric motor 129 is not driven, each last a few seconds. It will be evident that the cleaning program CP may contain a different number of cleaning phases having time periods and/or motor speeds different from those mentioned hereinbefore.

In the embodiments of Fig. 10 and Fig. 11, the quantitative condition of the cleaning liquid 119 in the cleaning device 101 is determined immediately after the cleaning program CP during a measuring phase MP by means of a method according to the invention. I.e., after controlling the electric motor 129 according to the cleaning program CP as described hereinbefore, the electric motor 129 is controlled to successively run at least at two different motor speeds during the measuring phase MP in order to determine the quantitative condition of the cleaning liquid 119 in the cleaning device 101.

In the embodiment of Fig. 10, the quantitative condition of the cleaning liquid 119 in the cleaning device 101 is determined by means of the first embodiment of the method 201 as described hereinbefore with reference to Fig. 6 and Fig. 7, although in a slightly modified way. I.e., during a first phase 325-1 of the measuring phase MP the electric motor 129 is controlled to run at the second motor speed MS₂, in this example about 7300 rpm, and the electric current I_{M2} in the electric motor 129 is measured. At t = tc the motor speed is changed from the second motor speed MS₂ to the first motor speed MS₁, in this example about 5600 rpm. Subsequently the electric current I_{M1} in the electric motor 129 is measured during a second phase 325-2 of the measuring phase MP. Subsequently, based on the measured electric currents I_{M1} and I_{M2} for the first and second motor speeds MS₁ and MS₂, the quantitative condition of the cleaning liquid 119 is determined and fed back to the user by means of the sixth, seventh and eighth steps 213, 215, 217 of the method 201 as described hereinbefore.

In the embodiment of Fig. 11, the quantitative condition of the cleaning liquid 119 in the cleaning device 101 is determined by means of the second embodiment of the method 301 as described hereinbefore with reference to Fig. 8 and Fig. 9, although in a slightly modified way. I.e., during the measuring phase MP the electric motor 129 is controlled to change the motor speed from the second end value MS_{N} of the range P_{MS} of motor speeds, in this example about 7300 rpm, to the first end value MS₁ of the range P_{MS} of motor speeds gradually and linearly over the predefined time period t_{MP} according to a preferred embodiment of the first step 303 of the method 301 as described hereinbefore. During said gradual change of the motor speed MS, the electric currents I_{M1}, I_{M2}, ... , I_{MN} in the electric motor 129 are each measured and registered when the motor speed MS reaches each respective one of the N different motor speeds MS₁, MS₂, ..., MS_{N}. Subsequently, based on the measured electric currents I_{M1}, I_{M2}, ..., I_{MN} for the N different motor speeds MS₁, MS₂, ..., MS_{N}, the quantitative condition of the cleaning liquid 119 is determined and fed back to the user by means of the third, fourth and seventh steps 307, 309, 315 of the method 301 as described hereinbefore.

Because in the embodiments of Fig. 10 and Fig. 11 the quantitative condition of the cleaning liquid 119 in the cleaning device 101 is determined after completion of the cleaning program CP, the shaving unit 105 of the electric shaver 103 will be clean. As a result, the influence of the presence of any debris on or in the shaving unit 105 on the measurement of the electric current I_{M} in the electric motor 129 will be limited as much as possible. In this way, the quantitative condition of the cleaning liquid 119 in the cleaning device 101 can be determined with sufficient accuracy immediately after the cleaning program CP, i.e., without first removing the electric shaver 103 from the cleaning device 101. It is however noted that, alternatively, the quantitative condition of the cleaning liquid 119 may be measurement during the cleaning program CP, preferably during the second half of the cleaning program CP when the majority of debris has been removed from the shaving unit 105. For embodiments wherein the cleaning device has a motor to drive the liquid-displacing member, such as the cleaning device 1 of Fig. 1, the quantitative condition of the cleaning liquid may be determined when the personal care device is not present in the receiving chamber of the cleaning device.

The processors 61, 161 as described here before can be implemented in numerous ways, with software and/or hardware, to perform the various functions as described hereinbefore. The processors 61, 161 may comprise one or more microprocessors or digital signal processors (DSPs) that may be programmed using software or computer program code to perform the required functions and/or to control components of the processors 61, 161 to achieve the required functions. The processors 61, 161 may be implemented as a combination of dedicated hardware to perform some functions (e.g., amplifiers, pre-amplifiers, analog-to-digital convertors (ADCs) and/or digital-to-analog convertors (DACs)) and a processing member (e.g., one or more programmed microprocessors, controllers, DSPs and associated circuitry) to perform other functions. Examples of components that may be employed in various embodiments of the invention include, but are not limited to, conventional microprocessors, DSPs, application specific integrated circuits (ASICs), and field-programmable gate arrays (FPGAs).

The invention also relates to a computer program product, particularly a computer program on or in a carrier, adapted to put the invention into practice. The computer program may be in the form of a source code, an object code, a code intermediate source and an object code such as in a partially compiled form, or in any other form suitable for use in the implementation of the method according to embodiments of the invention. It will also be appreciated that such a computer program may have many different architectural designs. For example, a program code implementing the functionality of the method, device or system according to the invention may be sub-divided into one or more sub-routines. Different ways of distributing the functionality among these sub-routines will be apparent to the skilled person. The sub-routines may be stored together in one executable file to form a self-contained computer program. Such an executable file may comprise computer-executable instructions, for example, processor instructions and/or interpreter instructions (e.g., Java interpreter instructions). Alternatively, one or more of the sub-routines or all sub-routines may be stored in at least one external library file and linked with a main program either statically or dynamically, e.g., at run-time. The main computer program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the computer program. For example, the carrier may include a data storage, such as a ROM, for example a CD ROM or a semiconductor ROM, or a magnetic recording medium, for example a hard disk. Furthermore, the carrier may be a transmissible carrier such as an electric or optical signal, which may be conveyed via electric or optical cable or by radio or other means. When the computer program is embodied in such a signal, the carrier may be constituted by such a cable or other device or means. Alternatively, the carrier may be an integrated circuit in which the computer program is embedded, the integrated circuit being adapted to perform, or being used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. A computer-implemented method (201, 301) for determining a quantitative condition (QC₁, QC₂) of a cleaning liquid (19, 119) in a cleaning device (1, 101) for a personal care device, said quantitative condition relating to a quantity of the cleaning liquid which is present in the cleaning device, the method comprising:
- receiving (205, 209; 303) from a sensor (65, 165) a sensor output (S_{IM}) relating to an electric current (I_{M}) in a motor (23, 129) configured to drive a liquid-displacing member (21, 121) of the cleaning device;
- determining (211, 305) the electric current in the motor from the received sensor output; and
- determining (213, 215; 307, 309) the quantitative condition based on the determined electric current in the motor and based on a predetermined relation between the quantitative condition and the electric current in the motor;
**characterized in that** the method (201, 301) further comprises:
- controlling (203, 207; 303) the motor (23, 129) to successively run at least at two different motor speeds (MS₁, MS₂);
- receiving (205, 209; 303), for each of the at least two different motor speeds, the sensor output (S_{IM1}, S_{IM2});
- determining (211, 305), for each of the at least two different motor speeds, the electric current (I_{M1}, I_{M2}) in the motor from the respective received sensor output;
- determining (213, 307), based on the electric currents in the motor determined for the at least two different motor speeds, a value of a parameter (P_{dI/dMS}) associated with an extent to which the electric current in the motor changes in dependence on the motor speed; and
- determining (215, 309) the quantitative condition (QC₁, QC₂) of the cleaning liquid (19, 119) based on the determined value of the parameter and based on a predetermined relation between the quantitative condition and the parameter.

2. The computer-implemented method (201, 301) as claimed in claim 1, further comprising providing (217, 315) a feedback signal (S_{QC}) relating to the determined quantitative condition (QC₁, QC₂) of the cleaning liquid (19, 119) to a feedback member (67, 167) to inform the user of the cleaning device (1, 101) about the determined quantitative condition.

3. The computer-implemented method (201, 301) as claimed in claim 1 or 2, comprising:
- determining (215, 309) that the cleaning liquid (19, 119) has a first quantitative condition (QC₁) when the determined value of the parameter (P_{dI/dMS}) is above a predetermined threshold value (P_{TH1}, P_{TH2}); and
- determining (215, 309) that the cleaning liquid has a second quantitative condition (QC₂) different from the first quantitative condition when the determined value of the parameter is below the predetermined threshold value.

4. The computer-implemented method (201) as claimed in claim 3, comprising:
- controlling (203, 207) the motor (23) to successively run at a first motor speed (MS₁) and at a second motor speed (MS₂) different from the first motor speed;
- receiving (205, 209) the sensor output (S_{IM1}, S_{IM2}) for the first motor speed and for the second motor speed; and
- determining (211) the electric current (I_{M1}, I_{M2}) in the motor for the first motor speed and for the second motor speed from the respective received sensor output;
wherein the parameter (P_{dI/dMS}) is a difference (I_{M2} - I_{M1}) between the electric currents in the motor determined for the first motor speed and for the second motor speed.

5. The computer-implemented method (301) as claimed in claim 3, comprising:
- controlling (303) the motor (129) to successively run at a plurality (N) of different motor speeds (MS₁, MS₂, ..., MS_{N}) within a range (P_{MS}) of motor speeds;
- receiving (303) the sensor output (S_{IM1}, S_{IM2}, ..., S_{IMN}) for each motor speed of said plurality of different motor speeds; and
- determining (305) the electric current (I_{M1}, I_{M2}, ..., I_{MN}) in the motor for each motor speed of said plurality of different motor speeds from the respective received sensor output;
wherein the parameter (P_{dI/dMS}) is a slope (dI/dMS) of a linear regression relationship (LRR₁, LRR₂) between said plurality of different motor speeds and the electric currents in the motor determined for each motor speed of said plurality of different motor speeds.

6. The computer-implemented method (301) as claimed in claim 5, further comprising:
- determining (311) a coefficient of determination, R², associated with the linear regression relationship (LRR₁, LRR₂); and
- determining (313) that the cleaning liquid (19, 119) has a third quantitative condition (SQ₃) different from the first and second quantitative conditions (SQ₁, SQ₂) when the determined coefficient of determination is below a predefined threshold value (P_{TH3}).

7. The computer-implemented method (301) as claimed in claim 5 or 6, comprising controlling (303) the motor (129) to change the motor speed (MS) from a first end value (MS₁) of the range (P_{MS}) of motor speeds to a second end value (MS_{N}) of the range of motor speeds gradually or linearly over a predefined time period (t_{MP}).

8. A computer program product comprising a non-transitory computer-readable medium, the computer-readable medium having computer-readable code embodied therein, the computer readable code being configured such that, on execution by a suitable computer or processor (61, 161), the computer or processor is caused to perform the method (201, 301) as claimed in any of the claims 1-7.

9. A cleaning device (1) for a personal care device, comprising:
- a housing (11);
- a receiving chamber (13) configured to receive at least a portion of the personal care device to be cleaned in a cleaning position within the receiving chamber;
- a reservoir (17) configured to hold a cleaning liquid (19);
- a liquid-displacing member (21) configured to displace the cleaning liquid from the reservoir to the receiving chamber for cleaning said portion of the personal care device;
- a motor (23) configured to drive the liquid-displacing member;
- a sensor (65) configured to measure an electric current (I_{M}) in the motor and provide a sensor output (S_{IM}) relating to the measured electric current in the motor; and
- a processor (61) configured to control the motor, receive the sensor output from the sensor and, based on the sensor output, to determine a quantitative condition (QC₁, QC₂) of the cleaning liquid in the cleaning device, said quantitative condition relating to a quantity of the cleaning liquid which is present in the cleaning device,
**characterized in that** the processor (61) is configured to perform the method (201, 301) as claimed in any of the claims 1-7 to determine the quantitative condition (QC₁, QC₂) of the cleaning liquid (19) in the cleaning device (1).

10. A personal care system (100) comprising a personal care device and a cleaning device (101) for the personal care device, wherein the cleaning device comprises:
- a housing (111);
- a receiving chamber (113) configured to receive at least a portion of the personal care device to be cleaned in a cleaning position within the receiving chamber;
- a reservoir (117) configured to hold a cleaning liquid (119);
- a liquid-displacing member (121) configured to displace the cleaning liquid from the reservoir to the receiving chamber for cleaning said portion of the personal care device; and
- a driven coupling member (131) connected with the liquid-displacing member;
wherein the personal care device comprises:
- a motor (129);
- a sensor (165) configured to measure an electric current (I_{M}) in the motor and provide a sensor output (S_{IM}) relating to the measured electric current in the motor;
- a driving coupling member (133) connected to the motor; and
- a processor (161) configured to control the motor and receive the sensor output from the sensor;
and wherein:
- the driven coupling member of the cleaning device and the driving coupling member of the personal care device are configured and arranged to be mutually coupled in the cleaning position of said portion of the personal care device such that the liquid-displacing member of the cleaning device is drivable by the motor of the personal care device;
**characterized in that** the processor (161) of the personal care device is configured to perform the method (201, 301) as claimed in any of the claims 1-7 to determine a quantitative condition (QC₁, QC₂) of the cleaning liquid (119) in the cleaning device (101), said quantitative condition relating to a quantity of the cleaning liquid which is present in the cleaning device.

11. The cleaning device (1) as claimed in claim 9, or the personal care system (100) as claimed in claim 10, wherein the processor (61, 161) is configured to:
- control the motor speed (MS) of the motor (23, 129) as a function of time according to a predefined cleaning program (CP); and
- after controlling the motor according to the predefined cleaning program, control the motor to successively run at least at said two different motor speeds (MS₁, MS₂) in order to determine the quantitative condition (QC₁, QC₂) of the cleaning liquid (19, 119).

12. The cleaning device (1) as claimed in claim 9 or 11, or the personal care system (100) as claimed in claim 10 or 11, wherein the personal care device is an electric shaver (3, 103) comprising a main body (9, 109) and a shaving unit (5, 105) coupled to the main body, and wherein the receiving chamber (13, 113) of the cleaning device (1, 101) is configured to receive the shaving unit of the electric shaver in the cleaning position within the cleaning chamber.

13. The cleaning device (1) as claimed in claim 12, or the personal care system (100) as claimed in claim 12, wherein:
- the shaving unit (105) comprises at least one hair-cutting unit (107) having an external cutting member (141) with hair-entry openings (143) and an internal cutting member (145) with cutting elements (147) covered by the external cutting member and movable relative to the external cutting member; and
- the cleaning device (101) comprises, for each hair-cutting unit, at least one liquid-injection nozzle (153) configured and arranged in the receiving chamber (13, 113) to provide, when the shaving unit is in the cleaning position, a jet of the cleaning liquid (119) propagating directly through at least one of the hair-entry openings into the respective hair-cutting unit.
